# EUROPÄISCHE PATENTSCHRIFT

(11) **EP 0 668 431 B1**
(45) Veröffentlichungstag und Bekanntmachung des Hinweises auf die Patenterteilung: **19.08.1998**
(21) Anmeldenummer: 95100941.4
(22) Anmeldetag: 25.01.1995
(51) Int. Cl.: E06B 9/68, H02J 7/35

(54) **Elektrische Antriebseinheit für eine Verdunkelungsvorrichtung**
Electric actuation unit for a light-blocking device
Unité d'actionnement électrique pour un dispositif d'obscurcissement

(30) Priorität: 18.02.1994 DE 4405163
(43) Veröffentlichungstag der Anmeldung: 23.08.1995
(73) Patentinhaber: ROBERT BOSCH GMBH, 70442 Stuttgart (DE)
(72) Erfinder: Meyer-Staufenbiel, Torsten, D-71254 Ditzingen (DE); Frei, Martin, D-71701 Schwieberdingen (DE); Straeter, Michael, Dipl.-Ing., D-70825 Korntal-Münchingen (DE); Sorg, Dieter, Dipl.-Ing., D-75050 Gemmingen (DE)

(56) Entgegenhaltungen:
- EP-A- 0 390 253
- EP-B- 0 092 118
- DE-A- 4 008 940
- DE-A- 4 241 781
- DE-C- 3 304 962

## Beschreibung

### STAND DER TECHNIK

Die Erfindung betrifft eine elektrische Antriebseinheit für eine Verdunkelungsvorrichtung, wie einen Rolladen, eine Markise, ein Rollo, einen Lamellenvorhang, einen Klappladen od.dgl., nach der Gattung des Hauptanspruchs.

Aus der EP-B-00 92 118 ist eine derartige Antriebseinheit für einen Rolladen bekannt, die anstelle des üblichen manuell betätigbaren Gurtwicklers in dessen Wandausnehmung einsetzbar ist. Im Gehäuse dieser Antriebseinheit befindet sich neben der Gurthaspel ein diese antreibender Antriebsmotor, der mittels einer zentralen Steuereinheit in gewünschten Betriebsarten elektronisch gesteuert betrieben werden kann. Weiterhin befindet sich in diesem Gehäuse wenigstens ein Akkumulator als Stromquelle für den Antriebsmotor, um einen netzunabhängigen Betrieb zu gewährleisten. Das Laden des Akkumulators erfolgt über ein externes Steckernetzteil oder über Solarzellen.

Externe Steckernetzteile haben zum einen den Nachteil, daß sie häufig nicht optimal für die erforderlichen Ladevorgänge ausgebildet sind und auch nicht sein können, da sie keine oder nur ungenügende Rückmeldungen über den Ladezustand des Akkumulators und den Entladestrom erhalten. Um einigermaßen sicher zu arbeiten, sind derartige Netzteile aufwendig und kostspielig konstruiert. Darüber hinaus besteht die Gefahr, daß durch Verwechslung eines Netzteils Schäden in der elektrischen Antriebseinheit entstehen, insbesondere beim Akkumulator. DE-A-4 241 781 offenbart eine elektrische Antriebseinheit für eine Verdunkelungsvorrichtung, welche Einheit netzunabhängig betrieben werden kann. Ein Solarmodul dient als Ladestromquelle für den Akkumulator.

### VORTEILE DER ERFINDUNG

Die erfindungsgemäße Antriebseinheit mit den kennzeichnenden Merkmalen des Hauptanspruchs hat den Vorteil, daß die zentrale Steuereinheit im Gehäuse der Antriebseinheit zusätzlich noch zur Steuerung des Ladestroms für den Akkumulator ausgebildet ist. Da derartige zentrale Steuereinheiten zweckmäßigerweise als Mikrocomputer ausgebildet sind, erfordern derartige zusätzliche Funktionen lediglich eine zusätzliche Programmierung, so daß sich die Kosten nur geringfügig erhöhen. Dafür kann ein sehr einfaches und kostengünstiges Netzteil, insbesondere Steckernetzteil, eingesetzt werden, das weder eine Spannungsstabilisierung noch eine Stromregelung od.dgl. enthalten muß. Da die zentrale Steuereinheit ohnehin mit den elektrischen Komponenten der Antriebseinheit verbunden ist, erhält sie automatisch die erforderlichen Informationen zur optimalen Ladung des Akkumulators und zur entsprechenden Einstellung des optimalen Ladestroms. Hierfür ist lediglich eine sehr einfache Halbleiteranordnung zwischen der Ladestromquelle und dem Akkumulator erforderlich, die durch die zentrale Steuereinheit gesteuert wird. Ein Anschließen eines falschen externen Steckernetzteils mit beispielsweise zu hoher Betriebsspannung ist bei der erfindungsgemäßen Anordnung unschädlich, da die interne zentrale Steuereinheit automatisch den korrekten Ladestrom einstellt bzw. einregelt.

Durch die in den Unteransprüchen aufgeführten Maßnahmen sind vorteilhafte Weiterbildungen und Verbesserungen der im Hauptanspruch angegebenen Antriebseinheit möglich.

Die Halbleiteranordnung zur Einstellung des Ladestroms besteht zweckmäßigerweise aus wenigstens einem Steuertransistor, vorzugsweise aus einem über wenigstens einen Vorstufentransistor gesteuerten Leistungstransistor, so daß die zusätzlich zur zentralen Steuereinheit erforderliche Ladeschaltung einfach und kostengünstig realisierbar ist.

Die Halbleiteranordnung wird in vorteilhafter Weise so ausgebildet, daß sie bei ausbleibendem Steuersignal der zentralen Steuereinheit und eingeschalteter Ladestromquelle maximal stromleitend ist. Dies hat den Vorteil, daß bei einer eventuellen Tiefentladung des Akkumulators dieser beim Anschließen der externen Ladestromquelle sofort geladen wird, obwohl die zur Verfügung stehende Spannung im Moment des Anschließens noch unterhalb der Reset-Schwelle des steuernden Mikrocomputers ist und dieser somit noch nicht tätig werden kann. Dennoch wird auf diese Weise ein sicheres Wiederaufladen gewährleistet.

Um den jeweiligen Ladevorgang optimal gestalten zu können, weist die zentrale Steuereinheit eine Ablaufsteuerung für unterschiedliche Ladevorgänge in Abhängigkeit des Ladezustandes des Akkumulators und/oder des Betriebszustands der Antriebseinheit und/oder der Art der angeschlossenen Ladestromquelle und/oder der Art des angeschlossene Akkumulators auf.

Die zentrale Steuereinheit besitzt vorzugsweise eine Prüfeinrichtung zur Feststellung der Art der angeschlossenen Ladestromquelle und/oder des angeschlossenen Akkumulators, wobei in Abhängigkeit der jeweils angeschlossenen Ladestromquelle und/oder des angeschlossenen Akkumulators ein entsprechender Ladevorgang eingestellt wird. Hierzu weist die Ladestromquelle und/oder der Akkumulator insbesondere eine Codiersteckverbindung auf, wobei die Prüfeinrichtung in diesem Falle zur Überprüfung der Art der Codiersteckvorrichtung ausgebildet ist. Hierdurch kann sehr schnell zwischen entsprechenden vorhandenen Ladeprogrammen umgeschaltet werden. Alternativ hierzu können auch verschiedene Anschlüsse für verschiedene Ladestromquellen und/oder Akkumulatoren vorgesehen sein, wobei dann die Prüfeinrichtung lediglich überprüfen muß, welcher Anschluß im Augenblick benützt wird. Weiterhin kann auch durch Zugriff über die Steckverbindung zum Akkumulator hin oder zur Ladestromquelle hin elektrisch die Art der jeweils angeschlossenen Vorrichtung überprüft werden, z.B. durch Messung der Spannung und/oder des Innenwiderstandes od.dgl.

Vorzugsweise bei angeschlossenem Solarmodul weist der Ladevorgang eine Ladebegrenzung zum Schutz gegen eine Überladung des Akkumulators auf.

Bei angeschlossenem Netzteil wird zwischen einem unterhalb eines vorgebbaren Ladezustands entladenen Akkumulator und einem nicht entladenen Akkumulator unterschieden. Bei entladenem Akkumulator erfolgt in vorteilhafter Weise zunächst eine Dauerladung bei einem maximalen Ladestrom während einer ersten vorgebbaren Zeit und wahlweise noch zusätzlich eine getaktete Ladung und/oder eine Ladung mit reduziertem Ladestrom während einer zweiten vorgebbaren Zeit. Demgegenüber erfolgt bei nicht entladenem Akkumulator lediglich eine Erhaltungsladung in Form einer getakteten Ladung mit größeren Taktpausen und/oder eine Ladung mit noch weiter reduziertem Ladestrom.

Da beim Einschalten des Antriebsmotors die Ladung des Akkumulators in jedem Falle abnimmt, besitzt die zentrale Steuereinheit zweckmäßigerweise Mittel zur Einschaltung des maximalen Ladestroms jeweils während des Betriebs des Antriebsmotors. Weiterhin besitzt sie zur optimalen Anpassung an den Verbrauch Mittel zur Berechnung der dem Akkumulator entnommenen Energie wenigstens während der Bewegungsphase des Motors in der Richtung mit dem größeren Energieverbrauch und zur Berechnung der erforderlichen Ladezeit zum Ausgleich der entnommenen Energie, wobei der Akkumulator wenigstens um diese berechnete Energie sofort wieder nachgeladen wird. Auf diese Weise wird der Ladezustand des Akkumulators immer wieder ausgeglichen und auf einem stabilen Niveau gehalten.

Die zentrale Steuereinheit besitzt in vorteilhafter Weise auch eine Zeitmeßeinrichtung zur Messung der Bewegungszeit des Motors, wobei der erforderliche Laststrom gemessen wird oder in der zentralen Steuereinheit als Konstante gespeichert ist. Hierdurch kann auf einfache Weise die entnommene Energie während einer Bewegungsphase des Motors berechnet werden. Die erforderliche Nachladeenergie wird in einer ersten Phase durch Dauerladung und in einer zweiten Phase durch getaktete Ladung und/oder Ladung mit geringerem Ladestrom dem Akkumulator zugeführt.

### ZEICHNUNG

Ein Ausführungsbeispiel der Erfindung ist in der Zeichnung dargestellt und in der nachfolgenden Beschreibung näher erläutert. Es zeigen:
- Fig. 1: eine schematische Darstellung der elektrischen Komponenten der elektrischen Antriebseinheit sowie gestrichelt eine mechanische Gehäuseanordnung und
- Fig. 2: ein Schaltbild der vom Mikrocomputer gesteuerten Ladeschaltung.

### BESCHREIBUNG DES AUSFÜHRUNGSBEISPIELS

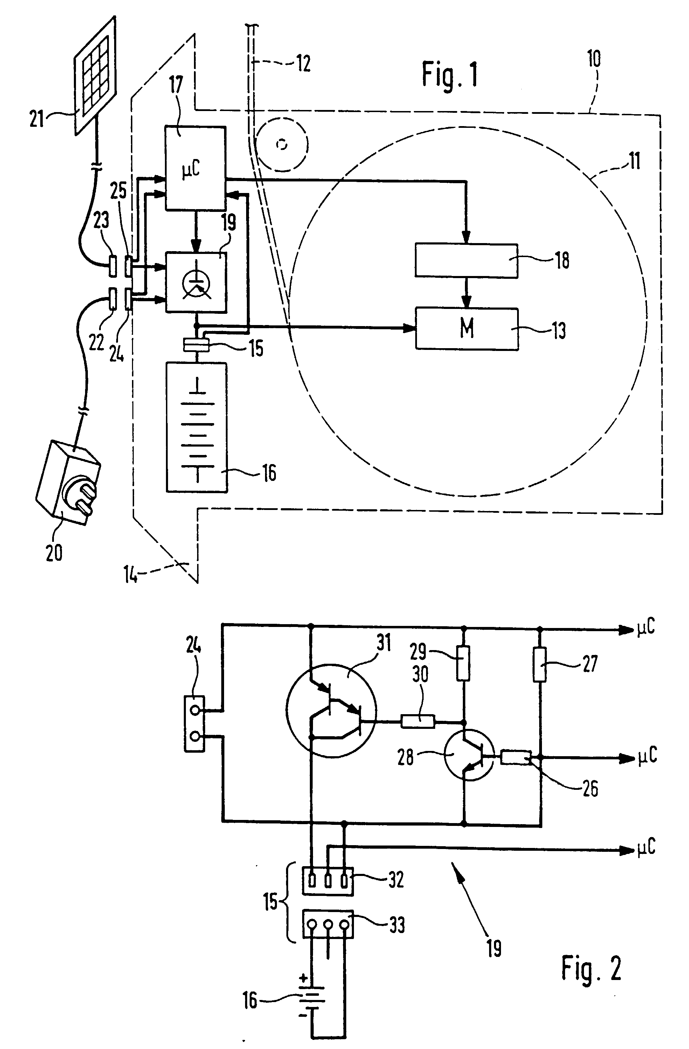

Bei der in Fig. 1 dargestellten elektrischen Antriebseinheit für einen Rolladen sind in einem schematisch (gestrichelt) dargestellten Gehäuse 10 eine Gurthaspel 11 zum Auf- und Abwickeln des Gurts 12 eines nicht dargestellten Rolladens sowie ein entsprechender Antriebsmotor 13 angeordnet. Das Gehäuse 10 ist gemäß dem eingangs angegebenen Stand der Technik in eine nicht dargestellte Wandöffnung eines manuellen Gurtwicklers einschiebbar ausgebildet, wobei der manuelle Gurtwickler durch die dargestellte Antriebseinheit ersetzt wird. Das Gehäuse 10 besitzt einen außen an der nicht dargestellten Wand anliegenden verbreiterten Bereich 14, der in ebenfalls nicht dargestellter Weise die Bedien- und Programmierelemente und wenigstens zum Teil die elektronische Steuerung enthält.

Schon an dieser Stelle sei darauf hingewiesen, daß die Erfindung nicht auf derartige Antriebseinheiten für Gurte eines Rolladens beschränkt ist, sondern auch elektrische Antriebseinheiten für andere Verdunkelungsvorrichtungen, wie Markisen, Rollos, Lamellenvorhänge, Klappläden u.dgl., umfaßt, bei denen ein elektrischer Antriebsmotor zum Antrieb der entsprechenden Vorrichtung in zwei Bewegungsrichtungen vorgesehen ist. Aus diesem Grunde ist die spezielle mechanische Anordnung in Fig. 1 lediglich gestrichelt dargestellt.

Als Stromversorgung für den Antriebsmotor 13 dient ein mit ihm über eine elektrische Steckvorrichtung 15 verbundener Akkumulator 16. Anstelle eines einzelnen Akkumulators 16 können selbstverständlich zur besseren Ausnutzung von Freiräumen auch mehrere kleinere Akkumulatoren verwendet werden.

Der Betrieb des Antriebsmotors 13 erfolgt programmgesteuert über einen Mikrocomputer 17 als zentrale Steuereinheit, die den Antriebsmotor 13 über eine Leistungsstufe 18 steuert. Ein solcher Betrieb kann beispielsweise zeitoder helligkeitsgesteuert sein, wobei auch ein Zufallsgenerator zur Steuerung vorgesehen sein kann. Beispiele für solche Steuerungen sind aus der DE 33 04 962 C2, der DE 40 08 940 A1 und dem eingangs angegebenen Stand der Technik bekannt.

Eine vom Mikrocomputer 17 gesteuerte Ladeschaltung 19, wie sie in Fig. 2 näher dargestellt ist, steuert oder regelt den Ladestrom für den Akkumulator 16. Hierzu ist die Ladeschaltung 19 zwischen wenigstens eine externe Stromquelle und den Akkumulator 16 geschaltet. Bei dem in Fig. 1 dargestellten Ausführungsbeispiel sind zwei externe Stromquellen vorgesehen, nämlich ein externes Steckernetzteil 20 und eine externe Solarzellenanordnung 21, die jeweils über Stecker 22, 23 mit entsprechenden Buchsenanordnungen 24, 25 am verbreiterten Bereich 14 des Gehäuses 10 elektrisch verbindbar sind. Die Solarzellenanordnung 21 ist dabei beispielsweise an der Außenseite eines Gebäudes neben der Verdunkelungsvorrichtung angeordnet. Die Buchsenanordnungen 24, 25 sind mit der Ladeschaltung 19 verbunden. Weiterhin sind die Buchsenanordnungen 24, 25 sowie die Steckverbindung 15 mit dem Mikrocomputer 17 verbunden, um diesem ein Abtasten der jeweils angeschlossenen Einrichtungen zu ermöglichen.

In Fig. 2 ist die Ladeschaltung 19 detaillierter dargestellt. Zur Vereinfachung ist lediglich die Buchsenanordnung 24 zum Anschluß des Steckernetzteils 20 dargestellt. Parallel zu den beiden Kontakten der Buchsenanordnung 24 ist ein Widerstand 27 geschaltet, wobei ein Anschluß dieses Widerstandes 27 sowohl mit einem Steuereingang des Mikrocomputers 17 als auch über einen Widerstand 26 mit der Basis eines npn-Vorsteuertransistors 28 verbunden ist. Die Kollektor-Emitter-Strecke dieses Vorsteuertransistors 28 bildet zusammen mit einem Kollektorwiderstand 29 eine Reihenschaltung, die ebenfalls an den beiden Kontakten der Buchsenanordnung 24 liegt. Der Kollektor dieses Vorsteuertransistors 28 ist über einen Basiswider-stand 30 mit der Basis eines Darlington- Transistors 31 verbunden, der als pnp-Leistungstransistor ausgebildet ist, dessen Kollektor über die Steckvorrichtung 15 mit dem positiven Pol des Akkumulators 16 und dessen Emitter mit den entsprechenden Kontakten der Buchsenanordnung 24 verbunden ist. Der andere Kontakt der Buchsenanordnung 24 ist über die Steckvorrichtung 15 mit dem negativen Pol des Akkumulators 16 verbunden. Anstelle eines Darlington-Transistors kann selbstverständlich auch ein anderer Leistungstransistor, beispielsweise ein MOS-Transistor, treten.

Die Steckvorrichtung 15 besteht aus einem mit der Ladeschaltung 19 verbundenen Stecker 32 und einem mit dem Akkumulator 16 verbundenen Gegenstecker 33. Zur leichten Identifizierung verschiedener Akkumulatoren ist ein mittlerer Kontakt des Steckers 32 mit dem Mikrocomputer 17 verbunden. Ein entsprechender Gegenkontakt des Gegensteckers 33 ist gemäß dem dargestellten Ausführungsbeispiel nicht angeschlossen. Beispielsweise könnte bei einem zweiten Akkumulatortyp dieser mittlere Gegenkontakt mit dem negativen Pol des Akkumulators und bei einem dritten Typ mit dem positiven Pol verbunden sein. Auf diese Weise kann der Mikrocomputer 17 durch Abtasten des Potentials des mittleren Kontakts die Art des angeschlossenen Akkumulators unterscheiden. Selbstverständlich kann auch eine andere bekannte mechanische oder elektrische Codiereinrichtung hierzu dienen.

Zur Erfassung der Art der angeschlossenen externen Stromquelle ist einer der beiden Kontakte der Buchsenanordnung 24 noch zusätzlich mit dem Mikrocomputer verbunden. Dieser kann beispielsweise durch Messen der anliegenden Spannung und/oder des elektrischen Widerstands zwischen den Buchsen od.dgl. die Art der angeschlossenen externen Stromquelle erfassen. Hierzu kann selbstverständlich auch eine Codiereinrichtung wie bei der Steckverbindung 15 oder eine andere bekannte Codiereinrichtung eingesetzt werden. Im einfachsten Falle kann eine einzige Buchsenanordnung 24 vorgesehen sein zum Anschluß des Steckernetzteils 20. In diese Buchsenanordnung 24 kann wahlweise auch die Solarzellenanordnung 21 eingesteckt werden. Besser ist es jedoch, gemäß Fig. 1 die zweite Buchsenanordnung 25 vorzusehen, die beispielsweise parallelgeschaltet sein kann. Es ist jedoch auch möglich, eine Umschalteinrichtung vorzusehen, bei der eine automatische Umschaltung auf das Steckernetzteil dann erfolgt, wenn der Ladezustand des Akkumulators eine Schwelle unterschritten hat und die Solarzellenanordnung 21 zu dem Zeitpunkt nicht genügend Strom liefern kann.

Die Ablaufsteuerung für verschiedene Ladevorgänge ist im Mikrocomputer 17 enthalten, beispielsweise in Form eines Teilprogramms. Selbstverständlich kann anstelle des Mikrocomputers 17 auch eine diskret aufgebaute elektronische Steuervorrichtung treten, bei der die Ladesteuerung dann ebenfalls diskret ausgebildet ist.

Zunächst soll die Wirkungsweise ohne Berücksichtigung der Solarzellenanordnung 21 beschrieben werden. Es soll zunächst vom Fall ausgegangen werden, daß der Akkumulator 16 tiefentladen ist, das heißt, die Akkumulatorspannung liegt unterhalb der Reset-Schwelle des Mikrocomputers 17, wodurch dieser inaktiv ist. Wird nun das Steckernetzteil 20 mit dem Leitungsnetz verbunden, so wird der Vorsteuertransistor 28 infolge der Spannung am Widerstand 26 stromleitend und steuert wiederum den Darlington-Transistor 31 in den stromleitenden Zustand. Dies bedeutet, daß der Akkumulator 16 sofort mit vollem Ladestrom geladen wird. Die Akkumulatorspannung steigt sehr schnell über die Reset-Schwelle des Mikrocomputers 17 an, und dieser kann nun das Lademanagement übernehmen. Ein typischer Ladevorgang besteht beispielsweise darin, daß zunächst für 3 Stunden mit maximalem Ladestrom dauergeladen wird, beispielsweise mit 300 mA. Bei vorher leerem Akkumulator ist dieser dann zu 150 % aufgeladen. Anschließend wird für weitere 3 Stunden getaktet geladen,das heißt, jeweils 1 Minute geladen und danach 1 Minute Pause. Dies kann bei einem reduzierten Ladestrom von ca. 200 mA erfolgen. Der Akkumulator ist dann mit 200 % aufgeladen. Diese Werte können selbstverständlich den Bedürfnissen des jeweiligen Akkumulators angepaßt werden. Es ist beispielsweise auch möglich, nach dem ersten Ladevorgang mit maximalem Ladestrom nur auf einen verringerten Ladestrom ohne Taktung herunterzuschalten oder weiterhin bei vollem Ladestrom zu takten. In einer einfachsten Ausführung ist auch nur ein Ladevorgang mit einem festgelegten Ladestrom über eine festgelegte Dauer möglich. Dieser zeitlichen Ladefunktion ist stets eine Abschaltbedingung überlagert, die den Ladevorgang (Dauerladen oder Impulsladen) bei Erreichen einer Akkumulatorspannung von beispielsweise 7,5 Volt abbricht.

Um den Akkumulator 16 immer im vollgeladenen Zustand zu halten, erfolgt auch nach einem Wiederaufladevorgang ein Dauerladevorgang. Dieser kann beispielsweise darin bestehen, daß jeweils einer Ladezeit von 1 Minute bei ca. 200 mA eine vierminütige Ladepause folgt. Die Zeiten und die Ladeströme der Ladevorgänge hängen selbstverständlich vom jeweils verwendeten Akkumulator 16 ab. Können verschiedene Akkumulatortypen wahlweise eingesetzt werden, so kann über den jeweils mittleren Kontakt der Steckvorrichtung 15 die Art des angeschlossenen Akkumulators abgetastet werden. Je nach Akkumulatortyp kann dieser mittlere Anschluß im Gegenstecker 33 nicht angeschlossen oder mit dem negativen oder positiven Pol des Akkumulators verbunden sein. Dies wird vom Mikrocomputer abgetastet, und über das abgetastete Potential wird auf die Art des angeschlossenen Akkumulators rückgeschlossen. Selbstverständlich können hier auch andere bekannte Codierarten verwendet werden.

Die Ladestromsteuerung durch den Mikrocomputer 17 kann auch noch folgende Funktion enthalten: Nach Betätigung des Antriebsmotors 13 zur Bewegung des Rolladens oder einer anderen Verdunkelungsvorrichtung in der einen oder anderen Bewegungsrichtung wird sofort das Steckernetzteil zugeschaltet durch entsprechende Ansteuerung des Vorstufentransistors 28. Beim Herunterlassen eines Rolladens wird relativ wenig Strom verbraucht, so daß nach dem entsprechenden Bewegungsvorgang die Ladeschaltung 19 wieder abgeschaltet wird, da der Rest der entnommenen Ladung über den ständigen, getakteten Ladevorgang wieder ersetzt werden kann. Beim Hochziehen des Rolladens erfaßt der Mikrocomputer 17 die Bewegungszeit und berechnet dann in Abhängigkeit eines fest einprogrammierten Laststroms die entnommene Energie. Daraus wird dann bei einem mittleren Ladestrom des Steckernetzteils von beispielsweise 250 mA die erforderliche Dauerladezeit berechnet, um diese entnommene Energie wieder zu ersetzen. Nach dieser Zeit werden weitere 50 % der entnommenen Energie durch taktenden Ladebetrieb wieder eingeladen. Auf diese Weise wird eine aus dem Akkumulator entnommene Energie jeweils sofort wieder ersetzt. Selbstverständlich kann dieses Ersetzen der entnommenen Ladung auch bei Bewegungen des Antriebsmotors in beiden Bewegungsrichtungen erfolgen.

Ist die Solarzellenanordnung 21 angeschlossen, so ergibt sich ein vereinfachter Ladevorgang dadurch, daß die Ladeschaltung 19 als einfacher Laderegler arbeitet, der jeweils die volle Energie aus der Solarzellenanordnung 21 dem Akkumulator 16 zuführt und lediglich eine Überladesicherung enthält, durch die bei Erreichen einer maximal erlaubten Spannung eine Abschaltung erfolgt.

Sind sowohl die Solarzellenanordnung 21 als auch das Steckernetzteil 20 angeschlossen, so kann dies vom Mikrocomputer 17 über das Abtasten der Buchsenanordnungen 24, 25 festgestellt werden. Dies kann beispielsweise auch über andere bekannte Codiereinrichtungen erfolgen, beispielsweise durch Abtasten des Widerstands an den Buchsenanordnungen 24 bzw. 25. Zunächst wird vom Mikrocomputer 17 dann das Steckernetzteil 20 abgeschaltet, solange die Solarzellenanordnung 21 genügend Energie zur Verfügung stellt. Erst wenn der Ladezustand des Akkumulators 16 unter einen vorgebbaren Pegel abgesunken ist, wird das Steckernetzteil 20 zugeschaltet. Dieses Zuschalten kann auch beispielsweise dann erfolgen, wenn der Ladestrom der Solarzellenanordnung 21 unterhalb eines vorgebbaren Werts absinkt. Die Ladesteuerung mit dem Steckernetzteil 20 als Stromversorgungsquelle kann dann in der bereits beschriebenen Weise erfolgen.

## Patentansprüche

1. Elektrische Antriebseinheit für eine Verdunkelungsvorrichtung, wie einen Rolladen, eine Markise, ein Rollo, einen Lamellenvorhang, einen Klappladen od.dgl., mit einem mittels einer zentralen Steuereinheit steuerbaren elektrischen Antriebsmotor, mit einem Akkumulator als Stromquelle für den Antriebsmotor und mit einem externen Netzteil und/ oder Solarmodul als Ladestromquelle für den Akkumulator, dadurch gekennzeichnet, daß die zentrale Steuereinheit (17) für den Antriebsmotor (13) zusätzlich zur Steuerung des Ladestroms für den Akkumulator (16) über eine zwischen der Ladestromquelle (20, 21) und den Akkumulator (16) geschaltete Halbleiteranordnung (19) ausgebildet ist.

2. Antriebseinheit nach Anspruch 1, dadurch gekennzeichnet, daß die zentrale Steuereinheit (17) als Mikrocomputer ausgebildet ist.

3. Antriebseinheit nach Anspruch 1 oder 2, dadurch gekennzeichnet, daß die Halbleiteranordnung (19) aus wenigstens einem Steuertransistor besteht.

4. Antriebseinheit nach Anspruch 3, dadurch gekennzeichnet, daß die Halbleiteranordnung (19) aus einem über wenigstens einen Vorstufentransistor (28) gesteuerten Leistungstransistor (31) besteht.

5. Antriebseinheit nach einem der vorhergehenden Ansprüche, dadurch gekennzeichnet, daß die Halbleiteranordnung (19) bei ausbleibendem Steuersignal der zentralen Steuereinheit (17) und eingeschalteter Ladestromquelle (20, 21) maximal stromleitend ist.

6. Antriebseinheit nach einem der vorhergehenden Ansprüche, dadurch gekennzeichnet, daß die zentrale Steuereinheit (17) eine Ablaufsteuerung für unterschiedliche Ladevorgänge in Abhängigkeit des Ladezustands des Akkumulators (16) und/oder des Betriebszustands der Antriebseinheit und/oder der Art der angeschlossenen Ladestromquelle (20, 21) und/oder der Art des angeschlossenen Akkumulators (16) aufweist.

7. Antriebseinheit nach Anspruch 6, dadurch gekennzeichnet, daß die zentrale Steuereinheit (19) eine Prüfeinrichtung zur Feststellung der Art der angeschlossenen Ladestromquelle (20, 21) und/oder des angeschlossenen Akkumulators (16) aufweist und daß in Abhängigkeit der jeweils angeschlossenen Ladestromquelle (20, 21) und/oder des angeschlossenen Akkumulators (16) ein entsprechender Ladevorgang zugeordnet wird.

8. Antriebseinheit nach Anspruch 7, dadurch gekennzeichnet, daß die Ladestromquelle (20, 21) und/oder der Akkumulator (16) eine Codiersteckverbindung (15; 22, 24; 23, 25) aufweist und daß die Prüfeinrichtung zur Überprüfung der Codierung der Codiersteckvorrichtung (15, 22, 24; 23, 25) ausgebildet ist.

9. Antriebseinheit nach Anspruch 7, dadurch gekennzeichnet, daß verschiedene Anschlüsse (32; 24; 25) für verschiedene Ladestromquellen (20, 21) und/oder Akkumulatoren (16) vorgesehen sind und daß die Prüfeinrichtung zur Überprüfung des jeweils benutzten Anschlusses ausgebildet ist.

10. Antriebseinheit nach einem der Ansprüche 6 bis 9, dadurch gekennzeichnet, daß eine Ladebegrenzung zum Schutz gegen eine Überladung des Akkumulators vorgesehen ist.

11. Antriebseinheit nach einem der Ansprüche 6 bis 10, dadurch gekennzeichnet, daß der Ladevorgang bei angeschlossenem Netzteil (20) und unter einen vorgebbaren Ladezustand entladenem Akkumulator (16) eine Dauerladung bei einem maximalen Ladestrom während einer ersten vorgebbaren Zeit und wahlweise oder zusätzlich eine getaktete Ladung und/oder eine Ladung mit reduziertem Ladestrom während einer zweiten vorgebbaren Zeit umfaßt.

12. Antriebseinheit nach Anspruch 11, dadurch gekennzeichnet, daß der Ladevorgang bei angeschlossenem Netzteil (20) und nicht unter den vorgebbaren Ladezustand entladenem Akkumulator (16) zur Aufrechterhaltung des Ladezustands eine getaktete Ladung mit größeren Taktpausen und/oder eine Ladung mit noch weiter reduziertem Ladestrom umfaßt.

13. Antriebseinheit nach einem der Ansprüche 6 bis 12, dadurch gekennzeichnet, daß die zentrale Steuereinheit (17) Mittel zur Einschaltung des maximalen Ladestroms jeweils während des Betriebs des Antriebsmotors (13) aufweist.

14. Antriebseinheit nach einem der Ansprüche 6 bis 13, dadurch gekennzeichnet, daß die zentrale Steuereinheit (17) Mittel zur Berechnung der dem Akkumulator (16) entnommenen Energie wenigstens während der Bewegungsphase des Antriebsmotors (13) in der Richtung mit dem größeren Energieverbrauch und zur Berechnung der erforderlichen Ladezeit zum Ausgleich dieser entnommenen Energie aufweist und daß der Akkumulator (16) wenigstens um diese berechnete Energie sofort wieder nachgeladen wird.

15. Antriebseinheit nach Anspruch 14, dadurch gekennzeichnet, daß die zentrale Steuereinheit (17) eine Zeitmeßeinrichtung zur Messung der Bewegungszeit des Antriebsmotors (13) aufweist und daß der erforderliche Ladestrom gemessen wird oder in der zentralen Steuereinheit (17) gespeichert ist.

16. Antriebseinheit nach Anspruch 14 oder 15, dadurch gekennzeichnet, daß die Nachladeenergie in einer ersten Phase durch Dauerladung und in einer zweiten Phase durch getaktete Ladung und/oder Ladung mit geringerem Ladestrom dem Akkumulator (16) zuführbar ist.

## Claims

1. Electric actuator unit for a dimming device such as a roller shutter, an awning, a roller blind, a louvre blind, a folding shutter or the like, having an electric activator motor which can be controlled by means of a central control unit, having an rechargeable battery as current source for the actuator motor, and having an external power supply unit and/or solar module as charging current source for the rechargeable battery, characterized in that the central control unit (17) for the actuator motor (13) is additionally constructed to control the charging current for the rechargeable battery (16) via a semiconductor arrangement (19) connected between the charging current source (20, 21) and the rechargeable battery (16).

2. Actuator unit according to Claim 1, characterized in that the central control unit (17) is constructed as a microcomputer.

3. Actuator unit according to Claim 1 or 2, characterized in that the semiconductor arrangement (19) comprises at least one control transistor.

4. Actuator unit according to Claim 3, characterized in that the semiconductor arrangement (19) comprises a power transistor (31) controlled via at least one small-signal transistor (28).

5. Actuator unit according to one of the preceding claims, characterized in that the semiconductor arrangement (19) conducts current at a maximum when there is no control signal from the central control unit (17) and the charging current source (20, 21) is switched on.

6. Actuator unit according to one of the preceding claims, characterized in that the central control unit (17) has a sequenced control system for different charging operations as a function of the state of charge of the rechargeable battery (16) and/or of the operating state of the actuator unit and/or of the type of charging current source (20, 21) connected and/or of the type of rechargeable battery (16) connected.

7. Actuator unit according to Claim 6, characterized in that the central control unit (19) has a test device for determining the type of charging current source (20, 21) connected and/or of the rechargeable battery (16) connected, and in that an appropriate charging operation is assigned as a function of the charging current source (20, 21) respectively connected and/or of the rechargeable battery (16) connected.

8. Actuator unit according to Claim 7, characterized in that the charging current source (20, 21) and/or the rechargeable battery (16) has a coding plug-in connection (15; 22, 24; 23, 25), and in that the test device is constructed for checking the coding of the coding plug-in connection (15, 22, 24; 23, 25).

9. Actuator unit according to Claim 7, characterized in that different terminals (32; 24; 25) are provided for different charging current sources (20, 21) and/or rechargeable batteries (16), and in that the test device is constructed for checking the terminal respectively used.

10. Actuator unit according to one of Claims 6 to 9, characterized in that a charging limitation is provided for protection against overcharging the rechargeable battery.

11. Actuator unit according to one of Claims 6 to 10, characterized in that, with the power supply unit (20) connected and the rechargeable battery (16) discharged below a prescribable state of charge, the charging operation comprises trickle charging in the case of a maximum charging current during a first prescribable time and, optionally or additionally, clock charging and/or charging with a reduced charging current during a second prescribable time.

12. Actuator unit according to Claim 11, characterized in that, with the power supply unit (20) connected and the rechargeable battery (16) not discharged below the prescribable state of charge, the charging operation comprises clocked charging with larger clock-pulse spaces and/or charging with a yet further reduced charging current for the purpose of maintaining the state of charge.

13. Actuator unit according to one of Claims 6 to 12, characterized in that the central control unit (17) has means for switching on the maximum charging current in each case during operation of the actuator motor (13).

14. Actuator unit according to one of Claims 6 to 13, characterized in that the central control unit (17) has means for calculating the energy drawn from the rechargeable battery (16) during the movement phase of the actuator motor (13) in the direction of the largest energy consumption and for the purpose of calculating the required charging time to compensate for this energy which has been drawn, and in that the rechargeable battery (16) is recharged again immediately at least by this calculated energy amount.

15. Actuator unit according to Claim 14, characterized in that the central control unit (17) has a time-measuring device for measuring the period of movement of the actuator motor (13), and in that the required charging current is measured, or stored in the central control unit (17).

16. Actuator unit according to Claim 14 or 15, characterized in that the recharging energy can be fed to the rechargeable battery (16) in a first phase by trickle charging and in a second phase by clock charging and/or charging with a lower charging current.

## Revendications

1. Unité électrique d'entraînement pour un dispositif d'obscurcissement, tel qu'un volet roulant, une banne, un store, un rideau à lamelles, un volet brisé ou analogue, avec un moteur électrique d'entraînement, qui peut être commandé au moyen d'une unité centrale de commande, avec un accumulateur en tant que source de courant pour le moteur d'entraînement et avec un bloc d'alimentation externe et/ou un module solaire comme source de courant de recharge de l'accumulateur,
caractérisée en ce que
l'unité centrale de commande (17) du moteur d'entraînement (13) est constituée en plus pour commander le courant de charge de l'accumulateur (16) au moyen d'un dispositif à semi-conducteurs (19) qui est branché entre la source du courant de charge (20, 21) et l'accumulateur (16).

2. Unité d'entraînement selon la revendication 1, caractérisée en ce que l'unité centrale de commande (17) est constituée sous la forme d'un micro-ordinateur (17).

3. Unité d'entraînement selon la revendication 1 ou 2, caractérisée en ce que le dispositif à semi-conducteurs (19) consiste en au moins un transistor de commande.

4. Unité d'entraînement selon la revendication 1, caractérisée en ce que le dispositif à semi-conducteurs (19) consiste en un transistor de puissance (31), commandé au moyen d'au moins un transistor (28) a étage préalable.

5. Unité d'entraînement selon l'une des revendications précédentes,
caractérisée en ce que
le dispositif à semi-conducteurs (19) laisse passer un courant maximal quand le signal de commande de l'unité centrale (17) fait défaut et quand la source du courant de charge (20, 21) est branchée.

6. Unité d'entraînement selon l'une des revendications précédentes,
caractérisée en ce que
l'unité centrale de commande (17) présente une commande de déroulement des différents processus de charge en fonction de l'état de charge de l'accumulateur (16) et/ou de l'état de fonctionnement de l'unité d'entraînement et/ou du type de la source de courant de charge (20, 21), qui a été raccordée, et/ou du type de l'accumulateur qui a été raccordé (16).

7. Unité d'entraînement selon la revendication 6,
caractérisée en ce que
• l'unité centrale de commande (19) présente un dispositif de contrôle pour déterminer le type de la source du courant de charge (20, 21) qui a été raccordée et/ou de l'accumulateur (16), qui a été raccordé, et
• en fonction de la source de courant de charge (20, 21) respectivement raccordée et/ou de l'accumulateur raccordé (16), on lui affecte un processus de charge correspondant.

8. Unité d'entraînement selon la revendication 7,
caractérisée en ce que
• la source de courant de charge (20, 21) et/ou l'accumulateur (16) présentent une connexion à codification (15, 22, 24, 23, 25), et
• le dispositif de contrôle est constitué pour contrôler la codification de la connexion à codification (15, 22, 24, 23, 25).

9. Unité d'entraînement selon la revendication 7,
caractérisée en ce que
• des raccords différents(32, 24, 25) sont prévus pour des sources de courant de charge (20, 21) différentes et/ou des accumulateurs différents (16) et
• le dispositif de contrôle est constitué pour contrôler le raccordement respectivement utilisé.

10. Unité d'entraînement selon l'une des revendications 6 à 9,
caractérisée en ce que
l'on prévoit une limitation de la charge pour protéger l'accumulateur contre une surcharge.

11. Unité d'entraînement selon l'une des revendications 6 à 10,
caractérisée en ce que
le processus de charge comprend, quand le bloc d'alimentation (20) est raccordé, et quand la charge de l'accumulateur (16) est tombée en dessous d'une valeur que l'on peut définir au préalable, une charge permanente avec un courant de charge maximal pendant un premier laps de temps, que l'on peut définir au préalable, et au choix ou en plus une charge cadencée et/ou une charge avec un courant de charge réduit pendant un deuxième laps de temps que l'on peut définir au préalable.

12. Unité d'entraînement selon la revendication 11,
caractérisée en ce que
le processus de charge, quand le bloc d'alimentation (20) est raccordé, et quand l'accumulateur (16) n'est pas déchargé en dessous de l'état de charge qui peut être défini au préalable, comprend pour maintenir l'état de la charge une charge cadencée avec des temps de pause plus grands et/ou une charge avec un courant de charge qui est réduit encore davantage.

13. Unité d'entraînement selon l'une des revendications 6 à 12,
caractérisée en ce que
l'unité centrale de commande (17) comprend des moyens pour brancher le courant maximal de charge respectivement pendant le fonctionnement du moteur d'entraînement (13).

14. Unité d'entraînement selon l'une des revendications 6 à 13,
caractérisée en ce que
• l'unité centrale de commande (17) présente des moyens pour calculer l'énergie prise à l'accumulateur (16) au moins pendant la phase de mouvement du moteur d'entraînement (13) dans le sens qui entraîne la plus grande consommation d'énergie et pour calculer le temps de charge qui est nécessaire pour compenser cette énergie prélevée et
• l'accumulateur (16) est rechargé immédiatement au moins de cette quantité d'énergie calculée.

15. Unité d'entraînement selon la revendication 14,
caractérisée en ce que
• l'unité centrale de commande (17) présente un dispositif de mesure du temps pour mesurer le temps pendant lequel le moteur d'entraînement (13) effectue un déplacement et
• le courant de charge nécessaire est mesuré ou est emmagasiné dans l'unité centrale de commande (17).

16. Unité d'entraînement selon la revendication 14 ou 15 ,
caractérisée en ce que
l'énergie nécessaire pour la recharge peut être fournie à l'accumulateur (16) dans une première phase par une charge continue et dans une seconde phase par une charge cadencée et/ou une charge avec un courant de charge plus faible.
